# EUROPEAN PATENT APPLICATION

(11) **EP 4 803 785 A1**
(43) Date of publication of application: **09.09.2026**
(21) Application number: 24884391.4
(22) Date of filing: 11.10.2024
(51) Int. Cl.: F16K 1/36, F16K 1/32, F16K 27/02, F16K 31/122, F16K 37/00

(54) **ADJUSTMENT VALVE AND FLOW ADJUSTMENT SYSTEM**

(30) Priority: 03.11.2023 CN 202311451651
(71) Applicant: Nanjing Exactra Automation Control Technology Co., Ltd., Nanjing, Jiangsu 211100 (CN)
(72) Inventor: MING, Xiao, Nanjing, Jiangsu 211100 (CN); MING, Di, Nanjing, Jiangsu 211100 (CN)
(74) Representative: Murgitroyd & Company
(86) International application number: PCT/CN2024/124081
(87) International publication number: WO 2025/092387

(57) **Abstract**

The present disclosure relates to a control valve and a flow regulating system, which belongs to the field of hydraulic control valves. The control valve includes: a valve body, a valve seat, a valve core, a throttling element, an actuator cylinder, a positioner cylinder, a driving device, and a position detector , where the valve seat and the throttling element are mounted in the valve body; a cylinder body of the actuator cylinder is connected to the throttling element; the valve core is connected to an actuating piston rod of the actuator cylinder; a chamber of the positioner cylinder correspondingly communicates with a chamber of the actuator cylinder; the driving device is connected to a positioning piston rod of the positioner cylinder; the position detector interacts with the positioning piston rod of the positioner cylinder; and chamber volumes, chamber lengths, and piston rod strokes of the positioner cylinder and the actuator cylinder are coordinated with each other. According to the present disclosure, the chamber of the positioner cylinder is allowed to correspondingly communicate with the chamber of the actuator cylinder, such that positioning of the piston rod of the positioner cylinder accurately represents postioning of the valve core, that is, an extent of valve opening, thereby solving the problem in the prior art that the extent of valve opening is uncertain.

## Description

### TECHNICAL FIELD

The present disclosure belongs to the field of hydraulic control valves, and particularly relates to a double-piston hydraulically-driven axial flow control valve.

### BACKGROUND

With the continuous progress of industrial production technology worldwide, the process industry is developing towards large-scale, integrated, intelligent, clean and other directions, which requires industrial enterprises to increase the investment in automation control devices, and a large number of control valves and predictive maintenance thereof are required for production process control to achieve process strengthening, functional safety and energy efficiency management. As an execution element of a control loop terminal, a control valve (also referred to as a control valve) plays an important role in process control of a process industry, and has also historically represented a significant technical deficiency. The existing problems are mainly reflected in the following aspects: the control valves have various varieties, specifications, and parameters, and thus the selection, installation, maintenance and management of the control valves are inconvenient; and the control valves have poor maintainability, reliability, and durability. The conventional angular valve, butterfly valve, spherical valve, and sleeve valve all have the above problems.

In order to solve these problems, an axial flow control valve has been successively introduced in the prior art. Unlike a conventional linear motion control valve, the axial flow control valve changes the overall flow structure of the conventional linear motion control valve, and the phenomenon that the flow direction of a throttling element of the conventional linear motion control valve is inconsistent with that of a medium is changed, such that the medium has less energy loss, and the flow capacity increases by 20% to 50% compared with that of the conventional linear motion control valve; and in addition, the axial flow control valve has the characteristics of low flow resistance coefficient, durability, low maintenance, high performance, and the like, and is widely applied to the regulation and control of natural gas, crude oil, product oil, and other non-corrosive gases and liquids. Related professional technicians and manufacturers at home and abroad have launched various axial flow control valves, such as US4638832, US2011/0017306A1, WO2019/20153A2, CN210770459U, CN209309448U, CN207539391U, CN20672442U, CN203797130U, CN203442298U, and CN107061834A.

The development of modern industry has put forward higher requirements for the control accuracy and rapid response of the flow control valve, and the prior art has the following problems in the face of higher performance requirements: the position of a valve core cannot be precisely measured in a valve body filled with a fluid medium in the prior art, which leads to the problems of the uncertainty of an extent of valve opening in the prior art, inaccurate position control of a valve core during throttling control of the valve core, and unsmooth transition and connection.

### SUMMARY

Objectives: Provided is a double-piston hydraulically-driven axial flow control valve, which can precisely detect and precisely control the valve opening, achieve closed-loop control, and thus form a hydraulic closed-loop controlled axial flow control valve, thereby solving the problems of the uncertainty of an extent of valve opening, inaccurate position control of a valve core during throttling control of the valve core, and unsmooth transition and connection.

Technical solutions: Provided is a double-piston hydraulically-driven axial flow control valve, which includes: a valve body, a valve seat, a valve core, a throttling element, an actuator cylinder, a positioner cylinder, a driving device, and a position detector.

The valve seat and the throttling element are mounted in the valve body; a cylinder body of the actuator cylinder is connected to the throttling element; the valve core is connected to an actuating piston rod of the actuator cylinder; a chamber of the positioner cylinder correspondingly communicates with a chamber of the actuator cylinder; the driving device is connected to a positioning piston rod of the positioner cylinder; and the position detector interacts with the positioning piston rod of the positioner cylinder.

Chamber volumes, chamber lengths, and piston rod strokes of the positioner cylinder and the actuator cylinder are coordinated with each other.

The driving device is configured for driving the positioning piston rod of the positioner cylinder to move, such that the actuating piston rod of the actuator cylinder drives the valve core to move relative to the valve seat, thereby controlling valve opening.

The position detector is configured for detecting a position of the positioning piston rod of the positioner cylinder to achieve detection of an extent of valve opening.

In a further embodiment, the chamber volume, the chamber length, and the piston rod stroke of the positioner cylinder are equal to the chamber volume, the chamber length, and the piston rod stroke of the actuator cylinder, such that a moving distance and speed of the positioning piston rod of the positioner cylinder are equal to a moving distance and speed of the valve core driven by the actuating piston rod of the actuator cylinder.

In a further embodiment, the valve seat is a streamlined valve seat.

The throttling element includes a front body and a straight pipe section, where the straight pipe section is mounted at one end of the front body close to the valve body, the front body is of a first arc-shaped cross-sectional structure, and the straight pipe section is of a rectangular cross-sectional structure.

One end of the valve core close to the valve seat is of a second arc-shaped cross-sectional structure, and the valve core is slidably connected to one end of the throttling element close to the valve seat.

The actuator cylinder is arranged between the valve core and the throttling element, and the valve core and the throttling element combined to form a water droplet-shaped structure, such that the flow field in the valve is optimized, and the problem that the actuator affects the fluid mechanical structure of the throttling element in the prior art is solved.

In a further embodiment, the control valve further includes: a thermal flow sensor mounted in the valve body and configured for detecting a flow rate of a fluid medium in the valve body.

In a further embodiment, the control valve further includes: a differential pressure flow sensor mounted in the valve body and configured for detecting a flow rate of a fluid medium in the valve body, such that two sets of redundant closed-loop control can be achieved.

In a further embodiment, the driving device is a linear stepping motor, or is composed of a stepping motor, a lead screw mechanism, and a guide rail mechanism.

In a further embodiment, the position detector is a displacement sensor arranged on one side of the positioning piston rod of the positioner cylinder.

In a further embodiment, the chamber volume of the positioner cylinder is equal to the chamber volume of the actuator cylinder, and the chamber length and the piston rod stroke of the positioner cylinder are N times the chamber length and the piston rod stroke of the actuator cylinder, where N > 1, such that a moving distance of the actuating piston rod of the actuator cylinder is equal to a moving distance of the positioning piston rod of the positioner cylinder divided by N, thereby further improving the control accuracy.

In a further embodiment, the driving device includes: a stepping motor, a nut, a lead screw, and guider.

The nut is mounted in the stepping motor, the nut is screwed to the lead screw, and the lead screw is connected to the positioning piston rod of the positioner cylinder.

The guider is mounted at end portions of the stepping motor.

Spline grooves are provided on a threaded portion of the lead screw, the guider is provided with protrusions snap-fitted into the spline grooves, and the lead screw engages with the guider via spline structure, which greatly reduces the volume and the cost of the entire control system of the control valve.

In a further embodiment, the position detector is composed of an angle sensor and a wheel assembly.

The angle sensor and the wheel assembly are arranged at one end of the lead screw away from the positioner cylinder; the wheel assembly is connected to the angle sensor; the wheel assembly is configured for providing a supporting force for the lead screw; when the lead screw drives the angle sensor to move, the wheel assembly rolls; and the angle sensor is configured for detecting a rotation angle of a wheel, thereby detecting the position of the positioning piston rod of the positioner cylinder, and further detecting the extent of valve opening. This can detect the position of the positioning piston rod of the positioner cylinder while providing a supporting force for the lead screw, such that the reuse of the mechanism is achieved.

Beneficial effects: According to the present application, the chamber of the positioner cylinder is allowed to correspondingly communicate with the chamber of the actuator cylinder, such that positioning of the piston rod of the positioner cylinder accurately represents positioning of the valve core, that is, an extent of valve opening, thereby solving the problem in the prior art that the extent of valve opening is uncertain.

Moreover, a hydraulic oil pressure signal generated by the piston of the positioner cylinder can reach the actuator cylinder instantaneously, while a hydraulic oil pressure signal generated by the piston of the actuator cylinder can reach the positioner cylinder instantaneously, such that the position of the valve core, that is, the valve opening, can be precisely controlled. Therefore, the system has good dynamic characteristics, and closed-loop control is provided, and thus a hydraulic closed-loop controlled axial flow control valve is formed. This solves the problems of inaccurate position control of the valve core during throttling control of the valve core and unsmooth transition and connection.

By the precise control of the position of the valve core, the moving speed of the valve core can be controlled, thereby adjusting the speed of pressure change across the throttling element; and the design of the appearance of the throttling element optimizes the pressure change before and after the fluid flows through the throttling element. The above measures reduce the vibration at the outlet and inlet of the throttling element. When the medium in the pipes is liquid, the possibility of flash evaporation, cavitation, and erosion is reduced. Therefore, higher performance requirements for the control accuracy and rapid response of the flow control valve proposed by the development of modern industry can be met.

Moreover, the chamber of the positioner cylinder is allowed to correspondingly communicate with the chamber of the actuator cylinder through the pipes, such that the volume of the connecting element in the valve body is greatly reduced, the flow resistance is reduced, and the influence on the flow state of the medium in the valve body is reduced, thereby further solving the problem in the prior art that the increase in the flow resistance caused by the large volume of the connecting element in the valve body affects the flow state of the medium in the pipes.

### BRIEF DESCRIPTION OF THE DRAWINGS

FIG. 1 is a schematic diagram of an overall structure according to the present disclosure.
FIG. 2 is a partial schematic diagram of an internal structure of a valve body according to the present disclosure.
FIG. 3 is a schematic diagram of a structural combination of a valve core and a throttling element according to the present disclosure.
FIG. 4 is an exploded schematic view of structure of a valve core and a throttling element according to the present disclosure.
FIG. 5 is a schematic diagram of an external structure of a valve body in an embodiment where a position detector is a displacement sensor according to the present disclosure.
FIG. 6 is a schematic structural diagram of an actuator cylinder in a valve body according to the present disclosure.
FIG. 7 is a schematic structural diagram of an embodiment where a wheel assembly is composed of a supporting element that is a support for fixing a wheel and the wheel that is connected to the supporting element according to the present disclosure.
FIG. 8 is a schematic structural diagram of an embodiment where a wheel assembly is composed of a wheel and a supporting element, the wheel abuts against the supporting element and the wheel rolls on the supporting element according to the present disclosure.
FIG. 9 is a schematic structural diagram of an embodiment where a driving device is composed of a stepping motor, a nut, a lead screw, and guider according to the present disclosure.

Reference numerals in the figures are as follows: valve body 1, throttling element 2, valve core 3, valve seat 4, actuator cylinder 5, actuating piston 6, actuating piston rod 7, thermal flow sensor 8, differential pressure flow sensor 9, hydraulic oil pipe 10, driving device 11, positioner cylinder 12, positioning piston 13, positioning piston rod 14, position detector 15, oil pipe connector 16, front body 17, straight pipe 18, stepping motor 111, lead screw 112, nut 113, guider 114, wheel 151, supporting element 152, and angle sensor 153.

### DETAILED DESCRIPTION

In the following description, numerous specific details are set forth in order to provide a more thorough understanding of the present disclosure. However, it will be apparent to those skilled in the art that the present disclosure may be implemented without one or more of these details. In other examples, in order to avoid confusion with the present disclosure, some technical features well known in the art are not described.

Disclosed is a double-piston hydraulically-driven axial flow control valve, which can precisely detect and precisely control the valve opening, achieve closed-loop control, and thus form a hydraulic closed-loop controlled axial flow control valve, thereby solving the problems of the uncertainty of an extent of valve opening, inaccurate position control of a valve core during throttling control of the valve core, and unsmooth transition and connection.

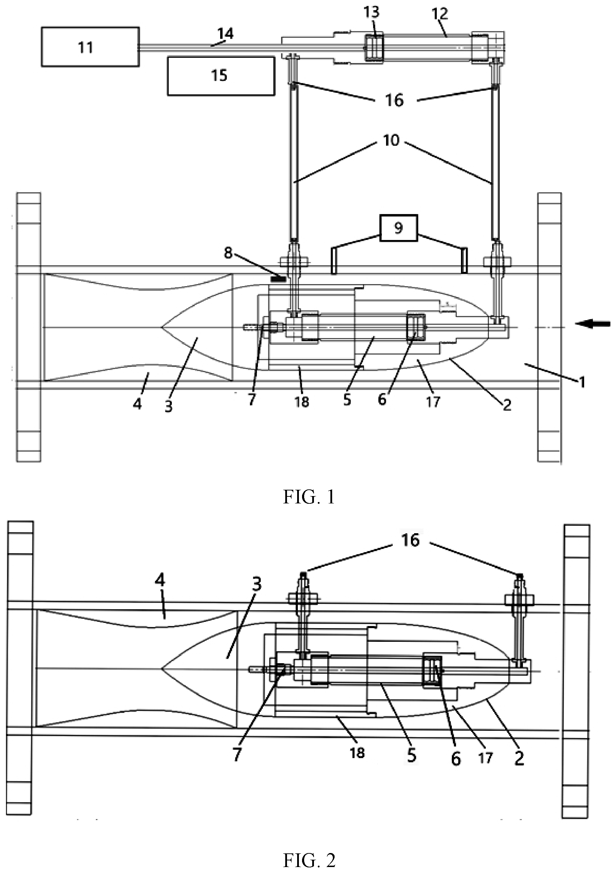

In a first embodiment,
as shown in FIG. 1, the double-piston hydraulically-driven axial flow control valve includes: a valve body 1, a valve seat 4, a valve core 3, a throttling element 2, an actuator cylinder 5, a positioner cylinder 12, a driving device 11, and a position detector 15.

The valve seat 4 and the throttling element 2 are mounted in the valve body 1; a cylinder body of the actuator cylinder 5 is connected to the throttling element 2; the valve core 3 is connected to an actuating piston rod 7 of the actuator cylinder 5; a chamber of the positioner cylinder 12 correspondingly communicates with a chamber of the actuator cylinder 5; the driving device 11 is connected to a positioning piston rod 14 of the positioner cylinder 12; and the position detector 15 interacts with the positioning piston rod 14 of the positioner cylinder 12. The chamber volumes, the chamber lengths, and the piston rod strokes of the positioner cylinder 12 and the actuator cylinder 5 are coordinated with each other. The driving device 11 is configured for driving the positioning piston rod 14 of the positioner cylinder 12 to move, such that the actuating piston rod 7 of the actuator cylinder 5 drives the valve core 3 to move relative to the valve seat 4, thereby controlling the valve opening.

The position detector 15 is configured for detecting the position of the positioning piston rod 14 of the positioner cylinder 12 to achieve the detection of the extent of valve opening.

In this embodiment, the chamber of the positioner cylinder 12 correspondingly communicating with the chamber of the actuator cylinder 5 means that the rod-end chamber communicates with the rod-end chamber and the cap-end chamber communicates with the cap-end chamber, such that when the inner diameters and the lengths of the chambers of the positioner cylinder 12 and the actuator cylinder 5 are equal, the position of the positioning piston rod 14 of the positioner cylinder 12 can be equal to the position of the actuating piston rod 7 of the actuator cylinder 5.

In this embodiment, the valve seat 4 and the throttling element 2 are both fixedly mounted in the valve body 1.

In this embodiment, the control valve further includes a controller; the driving device 11 and the position detector 15 are connected to the controller; the position detector 15 sends the extent of valve opening to the controller; and the controller is configured for sending an electrical signal to the driving device 11 to achieve control of the valve opening.

In the embodiment of FIG. 1, the control valve further includes: a thermal flow sensor 8 that is mounted in the valve body 1 and is configured for detecting a flow rate of a fluid medium in the valve body 1.

In the embodiment of FIG. 1, the control valve further includes: a differential pressure flow sensor 9 that is mounted in the valve body 1 and is configured for detecting a flow rate of a fluid medium in the valve body 1.

In this embodiment, the thermal flow sensor 8 and the differential pressure flow sensor 9 are connected to the controller.

It is possible to choose to install the thermal flow sensor 8 or the differential pressure flow sensor 9 in the control valve as needed, such that two sets of redundant closed-loop control can be achieved. One of the position detector 15, the thermal flow sensor 8, and the differential pressure flow sensor 9 may be selected as the main control, while the other serves as the backup. When the main control fails, it may be immediately switched to the backup control, thereby ensuring that the control valve can continue to operate normally.

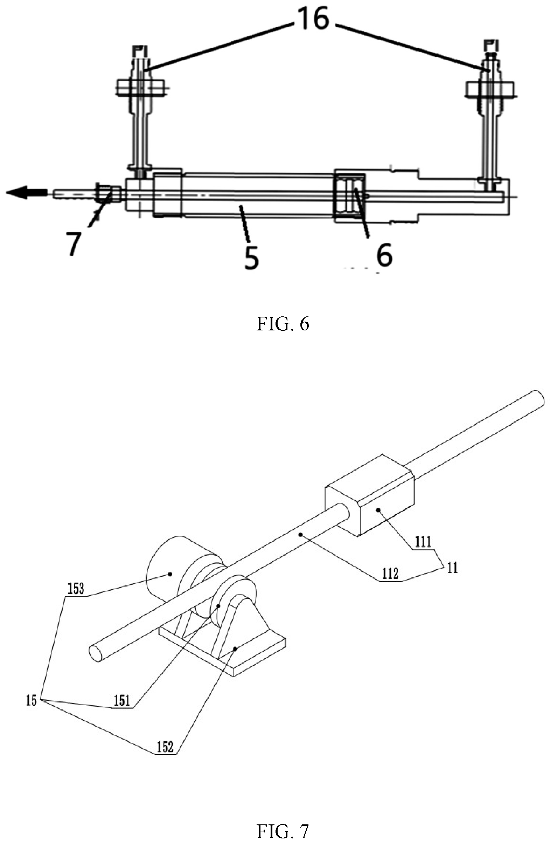

With regard to the positioner cylinder 12,
as shown in FIG. 1 and 7, the positioner cylinder 12 includes a positioning cylinder body, a positioning piston 13, and a positioning piston rod 14. The positioning piston 13 is arranged in the positioning cylinder body; one end of the positioning piston rod 14 is connected to the positioning piston 13, and the other end thereof extends to the exterior of the positioning cylinder body; and the positioning piston 13 divides a chamber in the positioning cylinder body into a rod-end chamber and a cap-end chamber.

With regard to the actuator cylinder 5,
as shown in FIG. 1 and 6, the actuator cylinder 5 includes an actuating cylinder body, an actuating piston 6, and an actuating piston rod 7. The actuating piston 6 is arranged in the actuating cylinder body; one end of the actuating piston rod 7 is connected to the actuating piston 6, and the other end thereof extends to the exterior of the actuating cylinder body; and the actuating piston 6 divides a chamber in the actuating cylinder body into a rod-end chamber and a cap-end chamber.

With regard to the coordination between the positioner cylinder 12 and the actuator cylinder 5,
oil pipe connectors 16 are respectively mounted on the rod-end chambers and the cap-end chambers of the positioner cylinder 12 and the actuator cylinder 5; the oil pipe connectors 16 of the two cylinders are connected through hydraulic oil pipes 10; and the actuator cylinder 5 and the throttling element 2 may be fixed in the valve body 1 through the oil pipe connectors 16. The hydraulic oil pipe 10 may be a hard pipe or a hose, and the length thereof may be adjusted on the basis of the on-site requirements.

In this embodiment, the chamber volume, the chamber length, and the piston rod stroke of the positioner cylinder 12 are equal to those of the actuator cylinder 5, such that the moving distance and speed of the positioning piston rod 14 of the positioner cylinder 12 are equal to the moving distance and speed of the valve core 3 driven by the actuating piston rod 7 of the actuator cylinder 5. In this embodiment, the positioner cylinder 12 and the actuator cylinder 5 with the same model, shape and size are preferred, such that the piston movement position of the positioning mechanism completely corresponds to the piston movement position of the actuating mechanism, and the positioning obtained from the piston rod of the positioning mechanism is completely the same as the positioning of the piston rod of the actuating mechanism, and thus is also completely the same as the positioning of the valve core 3. The positioning obtained by a displacement sensor on the piston rod of the positioning mechanism accurately represents the positioning of the valve core 3, that is, the extent of valve opening.

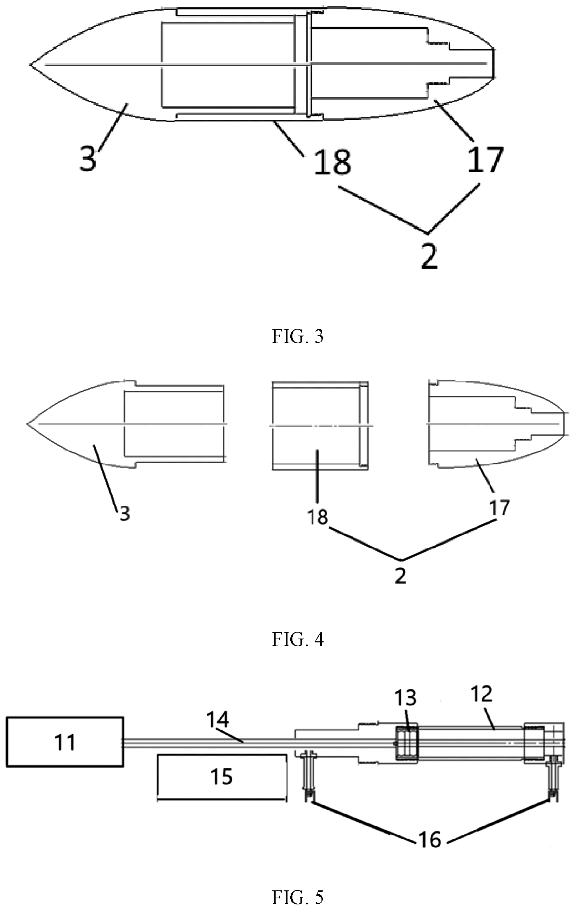

With regard to the valve seat 4, the throttling element 2, and the valve core 3,
as shown in FIG. 1, 2, 5, and 6, the valve seat 4 is a streamlined valve seat 4.

As shown in FIG. 1, 2, 3, and 4, the throttling element 2 includes a front body 17 and a straight pipe 18 section. The straight pipe 18 section is mounted at the end of the front body 17 close to the valve body 1; the front body 17 is a rotating body with a first arc-shaped cross-sectional structure; and the straight pipe 18 section is a rotating body with a rectangular cross-sectional structure.

The end of the valve core 3 close to the valve seat 4 is a rotating body with a second arc-shaped cross-sectional structure, and the valve core 3 is slidably connected to the end of the throttling element 2 close to the valve seat 4.

The actuator cylinder 5 is arranged between the valve core 3 and the throttling element 2, and the valve core 3 and the throttling element 2 are combined to form a water droplet-shaped structure.

In this embodiment, the size of the end of the water droplet-shaped structure away from the valve seat 4 is larger than the size of the end of the water droplet-shaped structure close to the valve seat 4.

The water droplet-shaped throttling element 2, designed and optimized using the computational fluid dynamics (CFD) method, ensures that no flow separation and vortices occur in the flow fields (velocity contours) at different valve openings, resulting in a highly stable flow field. This further ensures that the flow rate can be precisely measured in the valve body 1.

In some embodiments, simulation and optimization may also be performed by constructing a neural network.

The arrangement of the actuator cylinder 5 between the valve core 3 and the throttling element 2 may not cause damage to the water droplet-shaped structure of the throttling element 2 and the valve core 3, but optimizes the flow field in the valve. The measurement accuracy is ensured, and the problem that the actuator affects the fluid mechanical structure of the throttling element 2 in the prior art is solved.

With regard to the driving device 11, in this embodiment, the driving device 11 is a linear stepping motor 111, or is composed of a stepping motor 111, a lead screw mechanism, and a guide rail mechanism.

In this embodiment, an output end of the linear stepping motor 111 is connected to the positioning piston rod 14 of the positioner cylinder 12.

The driving device 11 composed of the stepping motor 111, the lead screw mechanism, and the guide rail mechanism is configured such that the stepping motor 111 is connected to a lead screw 112 of the lead screw mechanism, a nut 113 is arranged on the lead screw 112, the nut 113 is connected to a slider of the guide rail mechanism through a connecting element, and the nut 113 and the slider are connected to the positioning piston rod 14 of the positioner cylinder 12 through the connecting element.

With regard to the position detector 15,
in this embodiment, the position detector 15 is a displacement sensor that is arranged on the side of the positioning piston rod 14 of the positioner cylinder 12. The operating principle is as follows:
There are three closed-loop control methods:
1) Since position change information of the positioning piston rod 14 of the positioner cylinder 12 accurately reflects change information of the position of the valve core 3 and thus accurately reflects the change of the flow rate, the output quantity of the position detector 15 is taken as the object of the closed-loop control;
2) A thermal flow sensor 8 is mounted at a middle straight pipe 18 section of the throttling element 2 in the valve body 1, near the axial flow valve, and the output quantity of the thermal flow sensor 8 is taken as the object of closed-loop control; and
3) An output quantity of the differential pressure flow sensor 9 is taken as the object of the closed-loop control.

Redundancy control may be implemented based on the above-described three closed-loop control methods.

At least two sensors may be mounted in one control valve as needed to achieve at least two sets of closed-loop control. The output quantity of one of the sensors may be selected as the main control, while the other may serve as the backup. When the main control fails, it may be immediately switched to the backup control, thereby ensuring that the control valve can continue to operate normally.

The chamber of the positioner cylinder 12 is allowed to correspondingly communicate with the chamber of the actuator cylinder 5, such that the positioning of the piston rod of the positioner cylinder 12 accurately represents the positioning of the valve core 3, that is, the extent of valve opening. Therefore, precise flow measurement can be achieved in the valve body 1 and directly fed back to the controller.

Moreover, a hydraulic oil pressure signal generated by the piston of the positioner cylinder 12 can reach the actuator cylinder 5 instantaneously, while a hydraulic oil pressure signal generated by the piston of the actuator cylinder 5 can reach the positioner cylinder 12 instantaneously, such that the position of the valve core 3, that is, the valve opening, can be precisely controlled. Therefore, the system has good dynamic characteristics, and closed-loop control is provided, and thus a hydraulic closed-loop controlled axial flow control valve is formed.

By precise control of the position of the valve core 3, the moving speed of the valve core 3 can be controlled, thereby adjusting the speed of pressure change across the throttling element 2. Combined with the appearance of the water droplet-shaped throttling element 2 and the streamlined design of the valve seat 4, the flow coefficient is increased, and the noise and vibration can be significantly reduced. When the medium in the pipes is liquid, the possibility of flash evaporation, cavitation, and erosion is reduced. Therefore, higher performance requirements for the control accuracy and rapid response of the flow control valve proposed by the development of modern industry can be met.

The chamber of the positioner cylinder 12 is allowed to correspondingly communicate with the chamber of the actuator cylinder 5 through the pipes, such that the volume of the connecting element in the valve body 1 is greatly reduced, the flow resistance is reduced, and the influence on the flow state of the medium in the valve body 1 is reduced, so that the structure of the valve body 1 is simple, the material can be selected on the basis of the actual application requirements, and thus the entire control valve is lightweight. Moreover, the power transmission between the actuator in the valve body 1 and the positioner outside the valve body 1 is achieved by the hydraulic pressure, no movable mechanical part passes through the valve body 1, and welding or special glue is adopted between the hydraulic oil pipes 10 and the valve body 1, thereby achieving zero leakage.

In a second embodiment, the moving distance of the actuating piston rod 7 of the actuator cylinder 5 when the positioning piston rod 14 of the positioner cylinder 12 moves is adjusted on the basis of the first embodiment.

In this embodiment, the chamber volume of the positioner cylinder 12 is equal to that of the actuator cylinder 5, and the chamber length and the piston rod stroke of the positioner cylinder 12 are N times those of the actuator cylinder 5, where N > 1, such that the moving distance of the actuating piston rod 7 of the actuator cylinder 5 is equal to that of the positioning piston rod 14 of the positioner cylinder 12 divided by N.

In this embodiment, the chamber volumes of the two oil cylinders are allowed to be equal, and then the chamber length and the piston rod stroke of the positioner cylinder 12 are allowed to be N times those of the actuator cylinder 5, such that the accuracy of the extent of valve opening can be improved, and the control accuracy of the valve opening can be improved.

For example:
In the case of N = 2,
   when the valve core 3 needs to move by 2 mm, the positioning piston rod 14 of the positioner cylinder 12 moves by 4 mm, such that the actuating piston rod 7 of the actuator cylinder 5 can drive the valve core 3 to move by 2 mm; and
   when the valve core 3 needs to move by 0.25 mm, the positioning piston rod 14 of the positioner cylinder 12 needs to move by 0.5 mm, such that the actuating piston rod 7 of the actuator cylinder 5 can drive the valve core 3 to move by 0.25 mm.
In the case of N = 10,
   when the valve core 3 needs to move by 2 mm, the positioning piston rod 14 of the positioner cylinder 12 moves by 20 mm, such that the actuating piston rod 7 of the actuator cylinder 5 can drive the valve core 3 to move by 2 mm; and
   when the valve core 3 needs to move by 0.25 mm, the positioning piston rod 14 of the positioner cylinder 12 needs to move by 2.5 mm, such that the actuating piston rod 7 of the actuator cylinder 5 can drive the valve core 3 to move by 0.25 mm.

Obviously, the difficulty of controlling the positioning piston rod 14 of the positioner cylinder 12 to move by 2.5 mm is less than the difficulty of controlling the positioning piston rod 14 of the positioner cylinder 12 to move by 0.5 mm, and the control accuracy can be further improved by multiplying as needed.

In a third embodiment, the composition of the driving device 11 is adjusted on the basis of the first embodiment or the second embodiment.

The problem to be solved by this embodiment is that: When the valve core 3 needs to move by a long distance, especially on the basis of the embodiment, in which the chamber length and the piston rod stroke of the positioner cylinder 12 are N times those of the actuator cylinder 5, the stroke of the driving device 11 composed of the linear stepping motor 111 or the stepping motor 111, the lead screw mechanism and the guide rail mechanism also needs to be correspondingly increased. Especially in the prior art, the driving device 11 composed of the stepping motor 111 and the lead screw mechanism is configured such that the stepping motor 111 is connected to the lead screw 112 of the lead screw mechanism, and then the nut 113 screwed to the lead screw 112, together with the guide rail mechanism, is connected to the positioning piston rod 14 of the positioner cylinder 12, so as to drive the positioning piston rod 14 of the positioner cylinder 12 to move. With the increase in the stroke, the lengths of the lead screw 112 and the guide rail mechanism also need to increase accordingly, resulting in the increase in the stroke of the driving device 11. This causes the volume and the cost of the entire control system of the control valve to be greatly increased.

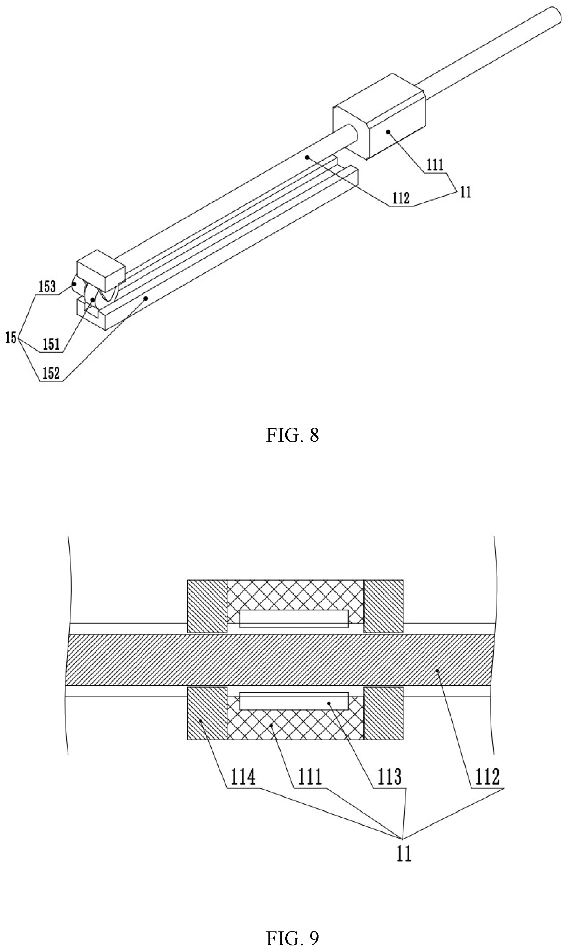

In order to solve the above problems, as shown in FIG. 9, the driving device 11 includes: a stepping motor 111, a nut 113, a lead screw 112, and guider 114. The nut 113 is mounted in the stepping motor 111, the nut 113 is screwed to the lead screw 112, and the lead screw 112 is connected to the positioning piston rod 14 of the positioner cylinder 12.

The guider 114 are mounted at end portions of the stepping motor 111.

Spline grooves are provided on a threaded portion of the lead screw 112, the guider 114 are provided with protrusions that are snap-fitted into the spline grooves, and the lead screw 112 engages with the guider 114 via the spline structure. In the embodiment shown in FIG. 1, two guider 114 are provided, and the two guider 114 are respectively at two ends of the stepping motor 111.

In this embodiment, the lead screw 112 may be connected to the positioning piston rod 14 of the positioner cylinder 12 either by a connecting element such as a screw or a coupling, or by a fixed connection structure such as welding, or by extending an end portion of the positioning piston rod 14 and providing a threaded portion and spline grooves on the positioning piston rod 14, such that the end portion of the positioning piston rod 14 serves as an integral structure with the lead screw 112.

In this embodiment, the nut 113 may be a planetary roller nut 113, such that the width of each spline is smaller than the radius of each roller of the planetary roller nut 113, thereby reducing the interference between the spline structure and the operation of the nut 113 and ensuring the operation stability of the lead screw 112. The spline grooves are allowed to be provided on the threaded portion of the lead screw 112, such that the length of the lead screw 112 is greatly reduced. Moreover, through the engagement between the lead screw 112 and the guider 114 via the spline structure, the normal movement of the lead screw 112 can be ensured without the guide rail mechanism, which greatly reduces the volume and the cost of the driving device 11 when the stroke increases, thereby greatly reducing the volume and the cost of the entire control system of the control valve.

In a further embodiment, the hydraulic cylinder is replaced with an electric actuating mechanism, and a worm gear drive mechanism is driven by an electric motor to achieve the synchronous movement of the two pistons. This can reduce the complexity and the cost of the hydraulic system, and improve the control accuracy and the reliability.

When an axial flow valve core structure is adopted, that is, a conical or spherical valve core is used instead of two pistons, the flow area is changed by axially rotating the valve core in the valve body. Therefore, the friction and wear inside the valve body can be reduced, thereby prolonging the service life and improving the stability of the valve.

In another embodiment of the present application, a split valve body structure is adopted, that is, the valve body is divided into two parts, one part is a fixed valve seat, and the other part is a movable valve core. Therefore, the valve core can be conveniently detached and replaced, thereby improving the maintenance efficiency and the flexibility.

In a fourth embodiment, the composition of the position detector 15 is adjusted on the basis of the third embodiment.

In the embodiments shown in FIGs. 7 and 8, the position detector 15 is composed of an angle sensor 153 and a wheel assembly.

The angle sensor 153 and the wheel assembly are arranged at the end of the lead screw 112 away from the positioner cylinder 12. The wheel assembly is connected to the angle sensor 153, and the wheel assembly is configured for providing a supporting force for the lead screw 112. When the lead screw 112 drives the angle sensor 153 to move, the wheel assembly rolls, and the angle sensor 153 is configured for detecting a rotation angle of a wheel 151, thereby detecting the position of the positioning piston rod 14 of the positioner cylinder 12, and further detecting the extent of valve opening.

In the embodiment shown in FIG. 7, the wheel assembly may be composed of at least one wheel 151 and a supporting element 152. The supporting element 152 is a support that is configured for fixing the wheel 151; the wheel 151 is connected to the supporting element 152; an outer side of the wheel 151 may be provided with an annular groove matched with the lead screw 112; the wheel 151 is spaced from the stepping motor 111 by a predetermined distance; and the wheel 151 is mounted at the lower portion of the lead screw 112 and abuts against the lead screw 112. The wheel 151 may be an elastic roller 151 that is provided with an elastic material such as rubber on the surface. The elastic material on the surface of the wheel 151 and the threads on the surface of the lead screw 112 can prevent the slippage between the wheel 151 and the lead screw 112, thereby ensuring the detection accuracy.

The length of a cantilever beam of the lead screw 112 can be reduced by the wheel 151, such that the operation accuracy and the stability of the lead screw 112 are ensured. Moreover, the cooperation between the wheel 151 and the angle sensor 153 can detect the position of the positioning piston rod 14 of the positioner cylinder 12 while providing a supporting force for the lead screw 112, such that the reuse of the mechanism is achieved, and the cost of the displacement sensor is also saved compared with the first embodiment.

In the embodiment shown in FIG. 8, the wheel assembly may further be composed of at least one wheel 151 and a supporting element 152. The wheel 151 is connected to the lead screw 112; the angle sensor 153 is connected to the lead screw 112; the wheel 151 is connected to the angle sensor 153; the supporting element 152 is arranged below the end of the lead screw 112 away from the positioner cylinder 12; the wheel 151 abuts against the supporting element 152; and the wheel 151 rolls on the supporting element 152.

The wheel 151 may be an elastic wheel 151 that is provided with an elastic material such as rubber on the surface, or may be a toothed wheel 151 that is provided with a toothed portion on the surface.

The supporting element 152 may be a flat plate matched with the wheel 151, or a C-shaped steel that is provided with a groove for accommodating a portion of the wheel 151, or a rack that meshes with the toothed wheel 151.

In this embodiment, although the supporting element 152 needs to be extended along with the increase in the stroke of the positioner cylinder 12, compared with the guide rail mechanism that is internally provided with a ball to ensure the guiding effect, the cost of extending the length of the supporting element 152 is much lower than the cost of extending the guide rail mechanism with a precise structure.

The wheel 151 is allowed to abut against the supporting element 152, such that a supporting force can be provided for the end of the lead screw 112 away from the positioner cylinder 12, thereby avoiding the cantilever beam structure and ensuring the operation accuracy and the stability of the lead screw 112. Moreover, the cooperation between the wheel 151 and the angle sensor 153 can detect the position of the positioning piston rod 14 of the positioner cylinder 12 while providing a supporting force for the lead screw 112, such that the reuse of the mechanism is achieved, and the cost of the displacement sensor is also saved compared with the first embodiment.

That is, regardless of whether the wheel assembly is an embodiment, in which the supporting element 152 is fixed to the wheel 151 or an embodiment, in which the wheel 151 is connected to the lead screw 112, the position of the positioning piston rod 14 of the positioner cylinder 12 can be detected while providing a supporting force for the lead screw 112, such that the reuse of the mechanism is achieved. As described above, although the present disclosure has been shown and described with reference to specific preferred embodiments, it should not be construed as a limitation on the present disclosure itself, and various changes in form and details may be made therein without departing from the spirit and scope of the present disclosure as defined by the appended claims.

## Claims

1. A control valve, comprising: a valve body, a valve seat, a valve core, a throttling element, an actuator cylinder, a positioner cylinder, a driving device, and a position detector, wherein
the valve seat and the throttling element are mounted in the valve body; a cylinder body of the actuator cylinder is connected to the throttling element; the valve core is connected to an actuating piston rod of the actuator cylinder; a chamber of the positioner cylinder correspondingly communicates with a chamber of the actuator cylinder; the driving device is connected to a positioning piston rod of the positioner cylinder; the position detector interacts with the positioning piston rod of the positioner cylinder;
chamber volumes, chamber lengths, and piston rod strokes of the positioner cylinder and the actuator cylinder are coordinated with each other;
the driving device is configured for driving the positioning piston rod of the positioner cylinder to move, such that the actuating piston rod of the actuator cylinder drives the valve core to move relative to the valve seat, thereby controlling valve opening;
the position detector is configured for detecting a position of the positioning piston rod of the positioner cylinder to achieve detection of an extent of valve opening;
the valve seat is a streamlined valve seat;
the throttling element comprises a front body and a straight pipe section, wherein the straight pipe section is mounted at one end of the front body close to the valve body, the front body is of a first arc-shaped cross-sectional structure, and the straight pipe section is of a rectangular cross-sectional structure;
one end of the valve core close to the valve seat is of a second arc-shaped cross-sectional structure, and the valve core is slidably connected to one end of the throttling element close to the valve seat; and
the actuator cylinder is arranged between the valve core and the throttling element, and the valve core and the throttling element combined to form a water droplet-shaped structure.

2. The control valve according to claim 1, wherein the chamber volume, the chamber length, and the piston rod stroke of the positioner cylinder are equal to the chamber volume, the chamber length, and the piston rod stroke of the actuator cylinder, such that a moving distance and speed of the positioning piston rod of the positioner cylinder are equal to a moving distance and speed of the valve core driven by the actuating piston rod of the actuator cylinder.

3. The control valve according to claim 1, further comprising: a thermal flow sensor mounted in the valve body and configured for detecting a flow rate of a fluid medium in the valve body.

4. The control valve according to claim 1, further comprising: a differential pressure flow sensor mounted in the valve body and configured for detecting a flow rate of a fluid medium in the valve body; and
the driving device is a linear stepping motor, or is composed of a stepping motor, a lead screw mechanism, and a guide rail mechanism.

5. The control valve according to claim 1, wherein the position detector is a displacement sensor arranged on one side of the positioning piston rod of the positioner cylinder.

6. The control valve according to claim 1, wherein the chamber volume of the positioner cylinder is equal to the chamber volume of the actuator cylinder, and the chamber length and the piston rod stroke of the positioner cylinder are N times the chamber length and the piston rod stroke of the actuator cylinder, where N > 1, such that a moving distance of the actuating piston rod of the actuator cylinder is equal to a moving distance of the positioning piston rod of the positioner cylinder divided by N.

7. The control valve according to claim 1, wherein the driving device comprises:
a stepping motor, a nut, a lead screw, and guider, wherein
the nut is mounted in the stepping motor, the nut is screwed to the lead screw, and
the lead screw is connected to the positioning piston rod of the positioner cylinder;
the guider is mounted at end portions of the stepping motor; and
spline grooves are provided on a threaded portion of the lead screw, the guider is provided with protrusions snap-fitted into the spline grooves, and the lead screw engages with the guider via spline structure.

8. The control valve according to claim 7, wherein the position detector comprises an angle sensor and a wheel assembly, wherein
the angle sensor and the wheel assembly are arranged at one end of the lead screw away from the positioner cylinder; the wheel assembly is connected to the angle sensor; the wheel assembly is configured for providing a supporting force for the lead screw; when the lead screw drives the angle sensor to move, the wheel assembly rolls; and the angle sensor is configured for detecting a rotation angle of a wheel, thereby detecting the position of the positioning piston rod of the positioner cylinder, and further detecting the extent of valve opening.

9. A flow regulating system, comprising the control valve according to any one of claims 1 to 8.
